(19)

Europäisches Patentamt

European Patent Office

Office européen des brevets

(11) **EP 2 236 585 B1**

(12) **FASCICULE DE BREVET EUROPEEN**

(45) Date de publication et mention de la délivrance du brevet:
**16.05.2012 Bulletin 2012/20**

(51) Int Cl.:
*C10L 1/12* *(2006.01)*
*C10L 10/04* *(2006.01)*
*C10L 1/30* *(2006.01)*
*F02C 7/30* *(2006.01)*

(21) Numéro de dépôt: **09305279.3**

(22) Date de dépôt: **02.04.2009**

(54) **Procédé de fonctionnement d'un équipement thermique et utilisation d'un tel procédé pour inhiber la corrosion vanadique**

Verfahren zum Betreiben eines Wärmeerzeugers und Verwendung dieses Verfahrens zur Verhinderung von Korrosion durch Vanadium

Method of operating a thermal device and use of such a method to inhibit vanadium corrosion

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(43) Date de publication de la demande:
**06.10.2010 Bulletin 2010/40**

(73) Titulaire: **GE Energy Products France SNC 90000 Belfort (FR)**

(72) Inventeurs:
• **Molière, Michel 90000 Belfort (FR)**
• **Rocca, Emmanuel 54670 Malleloy (FR)**

• **Aranda, Lionel 54000 Nancy (FR)**
• **Chiaravalle, Aurélie 54000 Nancy (FR)**

(74) Mandataire: **Delprat, Olivier et al Casalonga & Partners Bayerstrasse 71/73 80335 München (DE)**

(56) Documents cités:
WO-A1-99/51707    CH-A- 307 980
GB-A- 764 752    US-A- 3 738 819
US-A- 4 047 875

**Description**

La présente invention concerne la protection contre la corrosion vanadique des équipements de combustion brûlant des combustibles liquides contaminés au vanadium. Elle concerne en particulier un procédé de fonctionnement d'un équipement thermique, par exemple une turbine à gaz, alimentée avec ce type de combustible.

D'un point de vue économique, il devient de plus en plus intéressant de valoriser dans des applications énergétiques certaines fractions pétrolières de faibles valeurs telles que : les pétroles bruts très lourds, les résidus de distillation (distillation atmosphérique ou sous vide), les sous-produits de conversion profonde des pétroles (« High Cycle Oil » et « slurries » issus des unités de FCC : « Fluid Catalytic Cracking ») et éventuellement certains distillats lourds.

A cette fin, ces combustibles peuvent être brûlés dans des équipements de combustion (ou "équipements thermiques") divers tels que : turbines à gaz, chaudières, fours, moteurs diesel, etc, en vue de produire de la chaleur, de l'énergie mécanique ou de l'électricité.

Toutefois, la présence dans ces fractions pétrolières de composés organiques du vanadium sous forme principalement de vanado-porphyrines génère des problèmes de corrosion des alliages métalliques et des céramiques qui sont utilisés comme matériaux structuraux ou comme revêtements superficiels (couches protectrices ou barrières thermiques) dans les parties de ces équipements exposées aux gaz de combustion à haute température (par exemple supérieures à 650˚C), parties qui seront désignées ci-après par « pièces chaudes ».

Dans ce qui suit, les turbines à gaz (ou « TAG ») seront prises comme exemple d'équipement de combustion ; le terme « machine » sera également utilisé. Selon l'usage, on appelle « température de flamme » (ou « $T_{f1}$ ») d'une TAG, non pas la température qui règne dans les flammes mais celle des gaz de combustion à leur entrée dans la turbine de détente (ou « turbine ») de la TAG. Ce paramètre de conception est important car le rendement d'une TAG augmente avec la valeur de sa température de flamme. Il convient aussi de rappeler que, dans les TAG modernes, les pièces les plus chaudes sont d'une part les pièces du système de combustion (tubes à flamme et pièces de transition) et d'autre part les composants de la turbine et principalement ceux du premier étage : aubes fixes (« directrices ») et mobiles (ailettes). Toutefois les limites de la métallurgie imposent que ces composants soient refroidis intérieurement de sorte que leur température de peau (c'est à dire la température de leurs parois) « $T_p$ » est inférieure à celle des gaz de combustion.

Cette forme de corrosion dite « corrosion vanadique » est due à la formation dans les flammes de composés du vanadium de degré d'oxydation (5) qui se distinguent par des points de fusion $T_f$ peu élevés et inférieurs à la température de flamme, tels que le pentoxyde de vanadium ($V_2O_5$ : $T_f$= 675˚C) ou des composés faisant intervenir des métaux alcalins tels que : les méta-vanadates alcalins ($NaVO_3$ : $T_f$ = 628˚C; $KVO_3$: $T_f$ = 517˚C; l'eutectique de ces deux sels : $T_f$ 475˚C) et les mélanges $V_2O_5$-$Na_2SO_4$ (eutectique à 40% de $Na_2SO_4$ en moles : $T_f$ = 500˚C). Il convient ainsi de noter que l'association de métaux alcalins (Na, K) à $V_2O_5$ est particulièrement nocive en raison de la formation de composés encore plus fusibles et par ailleurs plus fluides et plus conducteurs à l'état fondu.

Ces composés sont transportés sous forme liquide par les gaz de combustion depuis les chambres de combustion vers la turbine et la fraction qui se dépose sur les pièces chaudes peut provoquer des attaques électrochimiques vigoureuses caractéristiques des milieux électrolytiques fondus associés à des agents oxydants, en l'occurrence: le vanadium de degré d'oxydation (5) lui même, le soufre de degré d'oxydation (6) ($SO_3$ et sulfates) provenant du combustible ainsi que l'oxygène résiduel contenu dans les gaz de combustion.

La corrosion vanadique peut être inhibée en piégeant chimiquement $V_2O_5$ au sein de composés réfractaires et chimiquement stables qui suppriment le milieu électrolytique fondu et *ipso facto* cette forme de corrosion à haute température. Des inhibiteurs possibles du vanadium sont des composés à base de métaux alcalino-terreux, tels que les sels de calcium et les sels de magnésium ou encore des composés du nickel. Ces inhibiteurs, injectés au niveau des foyers des équipements de combustion à protéger, réagissent avec les composés du vanadium pour former des ortho-vanadates dont les points de fusion sont supérieurs à 1000˚C, et qui s'écrivent sous la forme $M_3(VO_4)_2$, où M désigne un métal alcalino-terreux ou le nickel. Dans le cas particulier du magnésium, on forme l'orthovanadate de magnésium (OV) de point de fusion égal à 1074˚C, selon la réaction suivante:

$$(1) \qquad V_2O_5 + 3\,MgO \rightarrow Mg_3(VO_4)_2.$$

En présence d'un excès de MgO, le bilan chimique s'écrit :

$$(1b) \qquad V_2O_5 + m\,MgO \rightarrow Mg_3(VO_4)_2 + (m-3)\,MgO.$$

Ce mode d'inhibition qui consiste à soustraire les dérivés vanadiques corrosifs des surfaces exposées et à les piéger dans des composés réfractaires et réputés stables, permet de protéger efficacement l'ensemble des matériaux, qu'ils soient métalliques, céramiques voire composites. L'inhibiteur doit être injecté en quantité suffisante pour, d'une part, piéger la totalité du vanadium apporté par le combustible et d'autre part former l'ortho-vanadate et non pas un vanadate moins riche en métal M tels que les pyro-vanadates $M_2V_2O_7$ (« PV ») ou les méta-vanadates $M(VO_3)_2$ (« MV ») qui sont insuffisamment réfractaires. Le méta-vanadate de magnésium fond à 742°C; la phase pyro-vanadate de magnésium, qui fond à une température légèrement inférieure à 1000°C (980°C), est non-corrosive à haute température mais est sujet au phénomène de frittage décrit ci-après.

Les rapports molaires ($MO/V_2O_5$) correspondant aux ortho-, pyro- et méta-vanadates sont respectivement : 3 ; 2 et 1. Le rapport molaire ($MgO/V_2O_5$) minimum pour assurer l'inhibition, qui sera également désigné ci-après par « rapport d'inhibition théorique » est donc de 3 dans le cas de l'inhibition par MgO.

Toutes les méthodes d'inhibition présentent l'inconvénient commun de ne pas diminuer mais au contraire d'augmenter le volume de cendres en sortie de flamme. Les cendres "magnésio-vanadiques" formées lors de l'inhibition au MgO se déposent dans la turbine et entraînent son encrassement progressif et une dégradation corrélative des performances de la TAG, c'est-à-dire de son rendement et de la puissance qu'elle produit, qui est mécanique ou électrique selon l'application. On peut définir le « taux de déposition » des cendres comme le rapport entre la masse de cendres déposée dans la turbine à celle qui y entre sur une durée donnée. Ce « taux de déposition », dont résulte directement la vitesse d'encrassement, est un paramètre complexe qui n'est accessible que par l'expérimentation car, outre la température et la vitesse du courant gazeux et des particules de cendres en suspension, il dépend de nombreux autres facteurs difficiles à appréhender tels que : la nature chimique des cendres (composition du combustible) ; l'angle d'attaque des particules par rapport au substrat ; leur dureté comparée à celle des surfaces d'impact (ces surfaces d'impact sont au départ les parois métalliques nues, ou le revêtement superficiel, puis les couches qui s'y forment progressivement), sachant que le propriétés physiques de ces couches sont elles-mêmes susceptibles d'évoluer par suite de transformations physiques (compaction, densification) ou chimiques des cendres.

En particulier, ces couches de dépôt sont le siège des équilibres chimiques exposés plus loin et sont par ailleurs soumises au « frittage ». Ce dernier phénomène qui est essentiel dans le vieillissement des dépôts, affecte tout solide cristallin porté à haute température sur de longues durées : celui-ci tend à se densifier par réduction de sa porosité, à recristalliser et à durcir. Par conséquent, quelque soit la méthode d'inhibition, le long séjour des cendres sur les pièces chaudes est susceptible de conduire au frittage progressif des dépôts qui deviennent alors plus difficile à éliminer.

On notera que les particules de cendres déposées sur les composants du 1er étage turbine et balayées par les gaz de combustion sont soumises à une température ("$T_d$") comprise entre la température de peau (Tp) et la température de flamme $T_{fl}$, et qui tend à augmenter lorsque $T_{fl}$ augmente.

En outre, le frittage est accéléré en présence d'une phase fondue qui accélère la diffusion interne des atomes. Par ailleurs, la température de début de frittage d'une phase est corrélée à sa température de fusion : moins la phase est réfractaire et plus elle tend à fritter alors même qu'elle est au-dessous de son point de fusion commençante ou « température de solidus ». Ceci conduit à éviter la présence dans les cendres de métaux alcalins, et notamment du sodium. En effet, ces métaux forment, comme indiqué précédemment, des combinaisons avec $SO_3$ et $V_2O_5$ qui, outre leur caractère corrosif, ont des points de fusion très bas. C'est pourquoi un « dessalement » poussé des combustibles est réalisé en amont de l'équipement de combustion.

Afin de limiter les pertes d'exploitation entraînées par un fonctionnement par trop dégradé de la machine, il est indispensable que ces dépôts soient éliminés périodiquement des pièces chaudes. Deux méthodes de nettoyage peuvent être utilisées à cet effet :

- le « nettoyage à sec » consiste à injecter dans la turbine des projectiles constitués d'un matériau combustible, légèrement abrasif, sans cendres, qui est constitué typiquement de fragments de coquilles de noix de tailles calibrées. Son efficacité suppose donc que la couche de dépôt soit assez friable, n'adhère pas aux parois des pièces chaudes et puisse être désintégrée par cet abrasif doux. Cette méthode de restauration des performances est effectué « on-line », c'est-à-dire avec l'équipement en marche et en réduisant éventuellement temporairement sa charge. Cette méthode a donc un faible impact sur la disponibilité de la machine et sur la production.

- le « lavage à l'eau » consiste à injecter dans la turbine de l'eau chaude et exempte de sels corrosifs pour dissoudre et entraîner les dépôts de cendres. Ceci suppose que les dépôts comportent une phase soluble (tel que le sulfate de magnésium) en quantité suffisante pour déstabiliser lors de sa dissolution la totalité de la couche de dépôt qui sera alors entraînée par le courant d'eau de lavage. Comme un lavage à l'eau doit être effectué « off-line » (c'est-à-dire avec un équipement à l'arrêt) et requiert un refroidissement poussé préalable de l'équipement pour éviter tout choc thermique, il entraîne un arrêt de production de plusieurs heures ; cette méthode de restauration des performances a donc un fort impact sur la disponibilité de la machine et sur la production.

Les inhibiteurs à base de métaux alcalino-terreux (magnésium et calcium) sont très efficaces dans la protection contre la corrosion vanadique. Toutefois, la très faible solubilité dans l'eau du sulfate de calcium ($CaSO_4$), la dureté et la forte adhérence des dépôts qu'il forme, rendent inopérants les procédés de nettoyage cités ci-dessus. Les dérivés du calcium ne peuvent donc pas être utilisés en pratique comme inhibiteurs du vanadium.

Les inhibiteurs au magnésium qui sont des additifs commerciaux très utilisés présentent trois inconvénients principaux.

Le premier inconvénient est inhérent à la stabilité chimique limitée de l'ortho-vanadate $Mg_3(VO_4)_2$ en atmosphère sulfatante, c'est-à-dire contenant des oxydes de soufre. En effet, aux températures de service de l'équipement, ce sel est partiellement décomposé par le trioxyde de soufre avec production du sulfate et du pyro-vanadate, selon une réaction (2) équilibrée :

$$(2) \qquad Mg_3(VO_4)_2 + SO_3 \rightarrow Mg_2V_2O_7 + MgSO_4.$$

La formation de $MgSO_4$ est, en soi, un effet plutôt positif car l'excellente solubilité de ce sel permet l'élimination des dépôts de cendres lors de l'étape de lavage à l'eau selon le mécanisme décrit précédemment. Toutefois, le pyro-vanadate est insuffisamment réfractaire et on est donc amené à ajouter un certain excès de magnésium pour déplacer par effet d'action de masse la réaction (2) vers la gauche, ce qui conduit de fait à utiliser un rapport de dosage "m" = $(MgO/V_2O_5)$ molaire de l'ordre de 12,6, ce qui représente plus du quadruple du rapport stoechiométrique de la réaction (1) qui est de 3. Compte tenu des masses atomiques du magnésium et du vanadium (respectivement 24,3 et 50,9), ce rapport molaire de 12,6 correspond à un rapport Mg/V massique de 3 environ. Ce fort surdosage augmente le volume de cendres généré, aggrave donc l'effet d'encrassement et renchérit en outre le coût de l'inhibition.

Le second inconvénient provient du fait que les cendres à base de magnésium ont intrinsèquement un « taux de déposition » élevé sur les parties chaudes et engendrent donc un encrassement particulièrement rapide de la turbine de la TAG. Ceci est une caractéristique des phases $MgSO_4$-$Mg_3V_2O_8$ qui peut être vérifiée par des essais de simulation sur banc brûleur mais, comme indiqué précédemment, ne peut être déduite d'une approche purement théorique.

Un troisième inconvénient est lié à la stabilité thermique limitée de $MgSO_4$. Il s'établit en effet à haute température un équilibre de sulfatation/désulfatation, selon l'équation (3) :

$$(3) \qquad MgSO_4 \rightarrow MgO + SO_3.$$

A température croissante, cet équilibre est déplacé dans le sens endothermique, c'est-à-dire vers la droite et $MgSO_4$ tend donc à se désulfater. A l'équilibre, le taux de désulfatation est d'autant plus élevé que la concentration en $SO_3$ est faible (c'est-à-dire que la teneur en soufre du fuel est basse). Le sulfate de magnésium hydrosoluble est ainsi remplacé par de l'oxyde de magnésium qui n'est soluble ni dans l'eau ni dans l'ensemble des réactifs compatibles avec l'intégrité des superalliages. Par ailleurs, comme MgO a une masse volumique supérieure à celle de $MgSO_4$ (3600 kg/m3 contre 2600 kg/m3), il s'ensuit aussi une contraction physique et une agglomération du dépôt : celui-ci perd sa porosité et devient plus difficile à dissoudre ou à désintégrer mécaniquement tandis que sa tendance au frittage est augmentée par cette densification. L'expérience montre que la réaction de désulfatation débute pour une température de flamme de l'ordre de 1050˚C environ. Il est rappelé que cette température de 1050˚C est supérieure à la température correspondante des dépôts (« $T_d$ ») ce qui est conforme au fait que la température de désulfatation de $MgSO_4$ est plutôt de l'ordre de 900˚C, ce niveau variant avec la teneur en $SO_3$ d'après la réaction équilibrée (3). Il convient aussi de noter que la présence de particules de suies incandescentes parmi les cendres volantes tend à accélérer le phénomène de désulfatation. En effet, le carbone des suies réduit partiellement $MgSO_4$ en MgS qui est ultérieurement oxydé en MgO et $SO_x$ par l'oxygène des gaz de combustion. Enfin, une fois que le dépôt a été désulfaté dans sa masse, sa resulfatation, qui est thermodynamiquement possible en cas de baisse de la température ou d'augmentation de la teneur en soufre du fuel, est très lente en raison de la structure compactée des couches de MgO qui ralentit la diffusion de $SO_3$ à coeur.

Les inconvénients qui viennent d'être décrits peuvent être résumés de la façon suivante. A cause de ce phénomène de désulfatation de $MgSO_4$, l'inhibition au magnésium apparaît de fait comme un processus relativement complexe dont le bilan réel n'est pas celui, simple, de la réaction (1b) mais implique le système complet $Mg_3V_2O_8$-MgO-$MgSO_4$ et s'écrit globalement (en négligeant la formation de $Mg_2V_2O_7$) à l'aide de l'équation suivante :

$$(4) \qquad V_2O_5 + m\ MgO + \sigma\ SO_3 \rightarrow Mg_3\ V_2O_8 + (m-3)(1-d)MgSO_4 + d(m-3)MgO$$

où :

- m est le rapport molaire $MgO/V_2O_5$,
- d est le taux de désulfatation :

   (nombre de moles de MgO)/ (nombre de moles de MgO + $MgSO_4$),

- σ est le coefficient stoechiométrique du réactif $SO_3$ et vaut :

   (m-3) (1-d).

Le cas « idéal » correspond au cas m=3 et d=0 (formation de $Mg_3V_2O_8$ seul et en conditions stoechiométriques) et redonne l'équation (1). Dans la pratique, une valeur élevée de m est nécessaire pour minimiser la formation de $Mg_2V_2O_7$ : il faut ainsi 12,6 moles de MgO (au lieu de 3 en théorie) par mole de $V_2O_5$. Une telle augmentation de la valeur de m conduit, à température de flamme donnée, à une formation croissante de MgO et donc à un encrassement croissant. De plus, à température croissante, la valeur d du taux de désulfatation augmente, ce qui augmente également la formation de MgO.

Les trois effets, qui viennent d'être décrits, de décomposition partielle des vanadates, de désulfatation du sulfate de magnésium et de frittage progressifs des cendres seront désignés par la suite et de façon générique par l'expression « réactions (secondaires) de post-inhibition ». Globalement, ces réactions secondaires de post-inhibition font que, lorsque la température de flamme dépasse un niveau de l'ordre de 1090°C (pour fixer les idées), les dépôts de cendres à base de magnésium ne peuvent plus être éliminées des pièces chaudes, ni par lavage à l'eau, ni par nettoyage à sec. Cette température de 1090°C est donc la valeur maximale de température de flamme compatible avec un fonctionnement « durable » de la machine, c'est-à-dire un fonctionnement dans lequel il est possible de rétablir à tout moment l'état de propreté et par là les performances de la machine sans avoir à intervenir manuellement. Ce niveau de température de 1090°C fixe donc le rendement maximum des TAG brûlant des combustibles contaminés au vanadium avec une inhibition au magnésium, alors même que les TAG modernes peuvent fonctionner à des températures de flamme comprises entre 1140°C (TAG de 2$^{nde}$ génération ou de « classe E ») et 1430°C (TAG de 3$^{ème}$ génération ou de « classe F ») lorsque le combustible est très pur.

En d'autres termes, l'instabilité à haute température du sulfate de magnésium ($MgSO_4$) qui est la seule phase hydrosoluble des cendres fixe la limite des stratégies d'inhibition basées sur la formation de cendres partiellement hydrosolubles et dans lesquelles le « lavage à l'eau » constitue le mode primaire d'élimination des dépôts. Par ailleurs, bien que le sulfate de calcium ($CaSO_4$) soit beaucoup plus stable thermiquement que $MgSO_4$ et ne subisse pas de désulfatation jusque vers 1400°C, l'utilisation du calcium comme inhibiteur est à exclure pour les raisons évoquées précédemment.

Un autre inconvénient de l'inhibition au MgO réside dans la sensibilité au sodium des cendres magnésio-vanadiques : les traces éventuelles de sodium contenues dans le combustible (sodium résiduel restant après dessalement) ou dans l'air (poussières de $Na_2SO_4$ en ambiance industrielle ou embruns de NaCl en ambiance marine) sont transformées en $Na_2SO_4$ dans les flammes et s'incorporent aux cendres magnésiennes, soit sous forme de sulfate mixte $Na_6Mg(SO_4)_4$ qui fond à 670°C soit, du fait de la forte affinité existant entre le sodium et le vanadium, sous forme de vanadate mixte $NaMg_4(VO_4)_3$ qui fond à 570°C. Ces deux composés non seulement rendent les cendres plus fusibles et aggravent les phénomènes de frittage, mais sont aussi potentiellement corrosifs. Dans le passé, certains fournisseurs d'additifs ont proposé une augmentation substantielle du rapport de dosage (Mg/V), jusqu'à 10 en masse (contre 3, valeur habituelle) pour combattre ces deux effets liés au sodium ; toutefois, ceci aggrave en proportion l'effet d'encrassement et la solution industrielle préférée consiste à opérer un dessalement poussé du fuel.

Les inhibiteurs à base de nickel sont exempts de ces réactions secondaires de post-inhibition. Comme $NiSO_4$ est thermiquement instable et se décompose dès 600-700°C, les cendres sont exclusivement constituées d'ortho-vanadate de nickel et, bien que totalement insolubles dans l'eau, ces cendres sont non seulement réfractaires mais aussi très friables et non adhérentes. Elles sont donc aisément éliminées par des nettoyages à sec, voire par des lavages à l'eau qui permettent d'entraîner ces particules solides hors de la turbine. L'absence de réactions secondaires de post-inhibition, qui dispense de sur-doser fortement l'inhibiteur contribue aussi aux gains de performance obtenus avec cet inhibiteur en termes de puissance et de rendement. Toutefois l'inconvénient majeur du nickel est d'ordre économique, ce métal étant une « matière première stratégique » chère, dont le cours peut fluctuer dans de grandes proportions au fil des mois.

Par conséquent, une méthode d'inhibition performante du vanadium doit, outre une protection efficace des pièces chaudes, satisfaire à d'autres critères essentiels liés à l'optimisation du rendement et de l'« opération et maintenance » des machines. Ces critères, au nombre de quatre, sont :

- un coût modéré de l'inhibiteur,
- un rendement de machine élevé : l'inhibition doit être opérante aux températures de flamme élevées pour bénéficier pleinement du potentiel de rendement des TAG modernes,
- des performances « durables » : l'encrassement des pièces chaudes par les cendres doit être le plus lent possible et réversible, ce dernier terme signifiant que l'état de propreté des pièces chaudes doit pouvoir être restauré dans un cadre normal de maintenance, sachant que la notion de réversibilité de l'encrassement va de pair avec la suppression ou du moins la réduction des « réactions secondaires de post-inhibition » telles que définies plus haut,
- une bonne disponibilité de l'équipement : la méthode de nettoyage primaire utilisée doit limiter les indisponibilités de machine ce qui incite à utiliser des nettoyages à sec.

Il faut toutefois noter que les lavages à l'eau, effectués à intervalles plus espacés, restent un mode de nettoyage secondaire intéressant. En effet, d'une part, ils produisent un résultat similaire à celui d'un nettoyage à sec, par effet d'entraînement mécanique des particules de cendres par le courant aqueux. D'autre part, ils permettent d'éliminer périodiquement les phases riches en sodium mentionnées plus haut, qui tendent à s'accumuler et à modifier les cendres de façon délétère.

Vu les limites des méthodes d'inhibition actuelles, il est donc souhaitable de disposer d'une nouvelle méthode d'inhibition conforme aux quatre critères énumérés plus haut. Ainsi, le but de l'invention est de proposer un inhibiteur capable de : (i) piéger efficacement le vanadium, (ii) générer des cendres qui aient une taux de déposition minimum et soient facilement éliminables, de préférence par un procédé « on-line » (tel que le nettoyage à sec), enfin (iii) assurer ces deux fonctions jusqu'à une température limite la plus élevée possible.

La demanderesse a maintenant trouvé qu'il était possible et particulièrement avantageux d'utiliser à cette fin certains oxydes mixtes au magnésium.

Dans ce qui suit, on désigne par « oxyde mixte au magnésium » une combinaison entre MgO et un second oxyde dérivant d'un autre élément E et noté $E_yO_z$ où y et z sont deux entiers positifs. Les oxydes mixtes considérés ont pour formule générique : $xMgO\text{-}E_yO_z$ où x est un entier valant 1, 2 ou 3 selon la nature du second oxyde.

De tels oxydes $E_yO_z$ sont d'une part capables de réagir avec $MgSO_4$ à haute température selon la réaction (5) pour former $SO_3$ et un "oxyde mixte au magnésium" :

$$(5) \qquad xMgSO_4 + E_yO_2 \rightarrow xMgO\text{-}E_yO_z + x\,SO_3$$

D'autre part, l'oxyde mixte au magnésium ainsi formé est capable de réagir avec $V_2O_5$ pour former, dans une plage de composition E/Mg/V définie, l'orthovanadate $Mg_3V_2O_8$, selon le bilan réactionnel (6) :

$$(6) \qquad V_2O_5 + 3\,(xMgO\text{-}E_yO_z) \rightarrow Mg_3V_2O_8 + 3\,[(x\text{-}1)MgO\text{-}E_yO_z]$$

La réaction (6) représente la réaction d'inhibition steechiométrique de $V_2O_5$ qui, contrairement à la réaction (4) relative à l'inhibiteur MgO seul, ne fait plus intervenir $SO_3$.

En présence d'un excès d'oxyde mixte par rapport à la stoechiométrie, le bilan s'écrit:

$$(6b) \qquad V_2O_5 + n\,(xMgO\text{-}E_yO_z) \rightarrow Mg_3V_2O_8 + 3\,[(x\text{-}1)MgO\text{-}E_yO_z] + (n\text{-}3)\,(xMgO\text{-}E_yO_z),$$

où n est supérieur ou égal à 3.

Le second oxyde joue ainsi le double rôle de "séquestrant" de MgO vis-à-vis de $SO_3$ puis de "donneur" de MgO vis-à-vis de $V_2O_5$.

Le paramètre m qui a été défini précédemment comme le "rapport d'inhibition molaire" ($MgO/V_2O_5$) vaut : m = n x.

Chacun de ces oxydes mixtes $xMgO\text{-}E_yO_z$ constitue donc un inhibiteur de $V_2O_5$ utilisable en atmosphère sulfatante (c'est-à-dire riche en oxyde de soufre) car éliminant toute interférence des oxydes de soufre dans le processus d'inhibition. Les éléments "E" présentant ce comportement sont ceux des colonnes suivantes de la classification périodique : IIIa, IVa (à l'exception du carbone), IIIB (notamment le bore et l'aluminium), IVB (notamment le titane et le zirconium), VIII (notamment le fer) ou la série des lanthanides (notamment le cérium). Le terme "oxyde mixte au magnésium" est une désignation générale qui peut recouvrir, selon la nature de E : un sel (tel qu'un borate, un silicate), un oxyde double (tel que les spinelles $MgAl_2O_4$ et $MgFe_2O_4$) ou une solution solide (telle que $MgO\text{-}ZrO_2$ ou $MgO\text{-}CeO_2$).

Dans cette liste, il a été constaté que les oxydes mixtes au magnésium dans lesquels le second oxyde $EyO_z$ appartient au groupe: $B_2O_3$, $Al_2O_3$, $Fe_2O_3$, $SiO_2$, génèrent avec $V_2O_5$ des cendres particulièrement friables, non adhérentes et réfractaires (donc peu sensibles au frittage). Ces systèmes d'inhibition permettent par conséquent de s'affranchir des réactions secondaires de post-inhibition et les cendres qu'ils forment sont aisément éliminables tant par abrasion mécanique douce (nettoyage à sec) que par entraînement par lavage à l'eau.

Les oxydes mixtes au magnésium correspondants à ces quatre « seconds oxydes » sont :

- pour $B_2O_3$ : $3MgO\text{-}B_3O_3$ (x= 3, y = 2, z = 3)
- pour $Al_2O_3$: $MgO\text{-}Al_2O_3$ (x = 1, y = 2, z = 3)
- pour $Fe_2O_3$: $MgO\text{-}Fe_2O_3$ (x = 1, y = 2, z = 3)
- pour $SiO_2$: $2MgO\text{-}SiO_2$ (x = 2, y = 1, z = 2).

Par ailleurs la demanderesse a observé que :

- l'excès d'oxyde de magnésium par rapport à la stoechiométrie qui est nécessaire en pratique pour déplacer la réaction (6b) vers la droite est très limité ; dans cette réaction, cet excès est quantifié par le paramètre "n" qui peut être pris par exemple compris entre 3 et 4,5.

- la température de solidus des cendres augmente de façon monotone en fonction de "n" depuis une valeur supérieure à 1074˚C (n = 3 ; réaction (6), cendres riches en OV et pauvres en oxyde mixte) pour atteindre la température de solidus de xMgO - EyO$_z$ pur (n = ce), laquelle, pour l'ensemble des quatre oxydes mixtes préférés, est très élevée; en d'autres termes, il ne se forme pas d'eutectique entre les trois produits de la réaction (6b) et, plus on ajoute de l'oxyde mixte, plus le point de fusion commençante des cendres augmente. Ceci ouvre la voie à la mise en oeuvre de températures de flamme plus élevées que dans le cas de l'inhibition classique au MgO.

En particulier, la demanderesse a établi que l'utilisation de l'oxyde mixte au magnésium et au bore Mg$_3$B$_2$O$_6$ permet de maximiser les avantages qui viennent d'être décrits.

L'oxyde borique B$_2$O$_3$ réagit rapidement et quantitativement à chaud avec MgO pour former, selon le rapport atomique (Mg/B), le tétraborate de magnésium MgB$_4$O$_7$ ("TB"), le pyroborate de magnésium Mg$_2$B$_2$O$_5$ ("PB") ou l'orthoborate de magnésium Mg$_3$B$_2$O$_6$ ("OB"). Ces sels peuvent s'écrire aussi respectivement MgO-2B$_2$O$_3$, 2MgO-B$_2$O$_3$ et 3MgO-B$_2$O$_3$, et résultent des réactions suivantes :

$$(7) \qquad MgO + 2\ B_2O_3 \rightarrow MgB_4O_7 : \text{tétraborate de magnésium}$$

$$(8) \qquad 3\ MgO + B_2O_3 \rightarrow Mg_3B_2O_6 \text{ orthoborate de magnésium}$$

$$(9) \qquad 2\ MgO + B_2O \rightarrow Mg_2B_2O_5 \text{ pyroborate de magnésium.}$$

B$_2$O$_3$ est également capable de réagir avec le sulfate de magnésium MgSO$_4$ pour former SO$_3$ :

$$(7b) \qquad MgSO_4 + 2\ B_2O_3 \rightarrow MgB_4O_7 + SO_3$$

$$(8b) \qquad 3\ MgSO_4 + B_2O_3 \rightarrow Mg_3B_2O_6 + 3\ SO_3$$

$$(9b) \qquad 2\ MgSO_4 + B_2O_3 \rightarrow Mg_2B_2O_5 + 2\ SO_3$$

A son tour, le pentoxyde de vanadium réagit rapidement et quantitativement avec les borates de magnésium pour donner des vanadates de magnésium. Dans le cas de l'orthoborate de magnésium, V$_2$O$_5$ est ainsi converti en orthovanadate de magnésium :

$$(10) \qquad 3Mg_3B_2O_6 + V_2O_5 \rightarrow Mg_3V_2O_8 + 3Mg_2B_2O_5.$$

L'orthoborate de magnésium est donc un inhibiteur du vanadium selon cette réaction qui correspond à la réaction générale (6) dans laquelle la formule "MgO-E$_y$O$_z$" s'identifie à "3 MgO-B$_2$O$_3$". La rapidité de l'ensemble de ces réactions permet une stabilisation rapide de la composition des cendres dans les gaz de combustion.

L'utilisation de B$_2$O$_3$ présente en outre trois avantages.

Le premier avantage lié à l'utilisation de B$_2$O$_3$ comme second oxyde réside dans les propriétés remarquables d'anti-déposition des cendres développées à haute température par le pyroborate et l'orthoborate de magnésium et qui ont été découvertes par la demanderesse. Ces propriétés assurent des taux de déposition particulièrement faibles des cendres sur les pièces chaudes. Des essais en banc brûleur sur des durées de 250 à 500 heures ont montré par exemple un taux de déposition en moyenne 8 fois plus faible dans le cas d'une inhibition avec bore que dans une inhibition sans bore (c'est-à-dire dans une inhibition par MgO seul). L'existence de ces propriétés exceptionnelles d'anti-déposition est un fait surprenant; en effet, Mg$_2$B$_2$O$_5$ et Mg$_3$B$_2$O$_6$ sont bien connus pour leurs performances lubrifiantes à froid et sont utilisés à ce titre comme additifs anti-usure dans certaines huiles pour engrenages métalliques. Toutefois, d'une part, ce comportement des borates de magnésium suppose l'existence de fortes charges mécaniques et, d'autre part, le mécanisme mis en jeu est la formation d'un film de borure métallique à faible coefficient de friction à la surface des parois métalliques mises en contact : la formation d'un tel borure par réduction du bore(III) ne peut se faire qu'en absence d'air, au sein du lubrifiant, qui de par sa nature hydrocarbonée a effectivement des propriétés réductrices. Ces conditions de faible température et de milieu non aéré sont donc très éloignées des conditions très chaudes et très oxydantes qui prévalent au sein des gaz de combustion d'un équipement thermique.

Un corollaire de ces propriétés d'anti-déposition est qu'il n'est pas nécessaire de reproduire exactement la stoechiométrie de l'oxyde mixte 3MgO-B$_2$O$_3$, c'est-à-dire de prendre le rapport (MgO/B$_2$O$_3$) égal à 3, mais qu'il est possible de prendre pour ce rapport des valeurs supérieures à 3, c'est-à-dire de mettre en oeuvre des mélanges (3MgO-B$_2$O$_3$ + MgO), pourvu que le pourcentage molaire de borates de magnésium (orthoborate et pyroborate) dans les cendres formées soit au moins égal à 33%. En effet, dans ces conditions, l'excès de magnésium non combiné au bore et qui se retrouve sous forme de mélange (MgO+MgSO$_4$) dans les gaz de combustion n'est pas susceptible de donner lieu aux réactions indésirables de post-inhibition sur les pièces chaudes car le dépôt des cendres est alors trop faible.

Le deuxième avantage considérable des inhibiteurs magnésio-borés, tout particulièrement par rapport à MgO, réside dans le maintien de leur performance en présence d'une quantité notable de sodium. En effet, lorsque du sodium est présent dans le combustible (ou dans l'air de combustion) et se retrouve après combustion incorporé dans les cendres sous forme de $Na_2SO_4$, il réagit avec $B_2O_3$, même en présence de magnésium, pour former le borate de sodium $Na_4B_2O_5$ qui n'est pas corrosif, contrairement aux sulfates et aux vanadates doubles formés dans l'inhibition au MgO. Cette réaction peut s'écrire :

$$(10b) \qquad 2\ Na_2SO_4 + 3\ Mg_2B_2O_5 \rightarrow Na_4B_2O_5 + 2\ Mg_3B_2O_6 + 2\ SO_3.$$

Il a pu être ainsi constaté que la protection par l'inhibiteur magnésio-boré reste efficace pour un rapport molaire $(Na_2SO_4/V_2O_5)$ allant jusqu'à 0,5 (soit un rapport atomique (Na/V) allant aussi jusqu'à 0,5) et que les cendres formées restent friables et non adhérentes malgré un léger durcissement. Par ailleurs, plus la teneur en borates de magnésium dans les cendres est élevée et moins cet effet de durcissement est perceptible. Cette aptitude à neutraliser le sodium et à supprimer ses effets néfastes est un avantage considérable des inhibiteurs magnésio-borés, qui ouvre la voie à la suppression de l'opération de dessalement des fuels.

Enfin, le troisième avantage réside dans le fait qu'il a été constaté que le pyroborate de magnésium $Mg_2B_2O_5$, sous-produit de la réaction d'inhibition (10) et qui est lui aussi riche en magnésium, réagit lui même avec $V_2O_5$ avec formation de pyrovanadate de magnésium:

$$(11) \qquad 4\ Mg_2B_2O_5 + 3\ V_2O_5 \rightarrow 3\ Mg_2V_2O_7 + 2\ MgB_4O_7.$$

Une molécule de pyro-borate de magnésium est ainsi en mesure de convertir 0,75 mole de $V_2O_5$ en pyroborate de magnésium.

Les cendres formées ($Mg_3V_2O_7$ et $MgB_4O_7$) ne sont pas corrosives à haute température et, bien que le point de fusion du tétraborate de magnésium ne soit pas très élevé (995˚C), il se situe au dessus de la température de paroi des pièces chaudes. Par conséquent, cette réaction entre le pyroborate de magnésium et $V_2O_5$ permet d'éviter qu'un sous-dosage accidentel de l'inhibiteur magnésio-boré n'entraîne une corrosion vanadique à haute température, ce qui constitue un avantage important au plan de la sécurité de l'inhibition. Cette "réserve d'inhibition" est conséquente car, en tenant compte de la réaction (11), chaque atome de magnésium permet, grâce à ce rôle "d'inhibiteur d'appoint" joué par le pyroborate de magnésium, de neutraliser non pas 0,11 de mole de $V_2O_5$ (selon la réaction (10)) mais 0,36 mole de $V_2O_5$ selon le bilan global :

$$(12) \qquad 12\ Mg_3B_2O_6 + 13\ V_2O_5 \rightarrow 4\ Mg_3V_2O_8 + 9\ Mg_2V_2O_7 + 6\ MgB_4O_7.$$

Contrairement à $MgSO_4$, l'ortho et le pyroborate de magnésium sont thermiquement très stables et ont en outre des points de fusion élevés (1312˚C et 1330˚C respectivement) ce qui rend leur utilisation particulièrement avantageuse pour l'accès à des températures de flamme très élevées.

En vue d'appréhender la portée des inhibiteurs magnésio-borés, il convient d'analyser le bilan chimique général d'une inhibition de $V_2O_5$ opérée en présence de MgO et $B_2O_3$. En partant d'une mole de $V_2O_5$, la réaction la plus générale s'écrit:

$$(13) \qquad V_2O_5 + m\ MgO + b\ B_2O_3 \rightarrow \alpha\ Mg_3V_2O_8 + (1\text{-}\alpha)\ Mg_2V_2O_7 + b\beta\ Mg_3B_2O_6 + b(1\text{-}\beta)\ Mg_2B_2O_5$$

où :

-   m désigne le rapport molaire $MgO/ V_2O_5$ : $m = (2 + \alpha) + b(2 + \beta)$ ;
-   b désigne le rapport molaire $B_2O_3/ V_2O_5$
-   $\alpha$ est la fraction de $V_2O_5$ convertie en $Mg_3V_2O_8$ et $(1\text{-} \alpha)$ la fraction convertie en $Mg_2V_2O_7$ ($0\leq \alpha \leq1$)
-   $\beta$ est la fraction de $B_2O_3$ transformée en $Mg_3B_2O_6$ et $(1\text{-} \beta)$ la fraction transformée en $Mg_2B_2O_5$ ($0 \leq \beta \leq1$)

La figure annexée indique, en l'absence de sodium, les produits formés selon un diagramme m-b tracé à partir des résultats de la demanderesse.

La figure comprend une première ligne 1 représentant l'ensemble des points vérifiant la relation : $m = 2 + b$.

La zone 10, située sous la ligne 1 d'équation $m = 2 + b$, correspond à un état de fonctionnement défavorable dans lequel les cendres sont corrosives et très fusibles par suite d'un fort défaut de magnésium. On y forme, en fonction de m et b, du tétraborate et du métavanadate de magnésium. De plus, pour m inférieur à $(1 + 0,5\ b)$, il reste même du

$V_2O_5$ et/ou du $B_2O_3$ libres.

La figure annexée comprend une deuxième ligne 2 représentant l'ensemble des points vérifiant la relation : m = 3 + 2b.

Dans la zone 20 située entre la ligne 1 et la ligne 2, on forme du pyrovanadate de magnésium (point de fusion : 980˚C), du pyroborate et du tétraborate de magnésium (point de fusion : 995˚C). Ce domaine correspond à un état de fonctionnement sans corrosion mais avec la formation de cendres qui ne sont pas liquides à la température de peau $T_p$ des pièces chaudes, mais qui ont une certaine tendance à fritter.

La figure annexée comprend une troisième ligne 3 représentant l'ensemble des points vérifiant la relation : m = 3 + 3b.

La zone 40 située au-dessus de la ligne 3 correspond à un état de fonctionnement sans corrosion mais encrassant, car il y a un fort excédent de magnésium (non combiné au bore) qui peut se sulfater pour produire des cendres qui contiendront donc non seulement $Mg_3V_2O_8$ et $Mg_3B_2O_6$, mais aussi $MgSO_4$ et $MgO$ par le jeu des réactions de post-inhibition.

La zone 30 qui est comprise entre les lignes 2 et 3 et inclut ces deux lignes, est avantageuse car on y forme de l'orthovanadate et un mélange de pyroborate et d'orthoborate de magnésium ($\alpha$=1 et 0≤β≤1 dans l'équation (13)). Ce domaine correspond à un état de fonctionnement assurant une inhibition avec formation de cendres réfractaires et un faible taux de déposition.

En particulier, il est proposé un procédé de fonctionnement d'un équipement thermique comprenant une chambre de combustion alimentée avec un combustible contaminé au vanadium et au soufre. On alimente également la chambre de combustion avec du bore et du magnésium, en quantités telles que les produits de combustion comprennent de l'orthovanadate de magnésium, et de l'oxyde mixte au magnésium et au bore, notamment soit de l'orthoborate de magnésium, soit du pyroborate de magnésium.

Préférentiellement, les rapports molaires du magnésium m et du bore b vérifient la relation : 3 + 2b ≤ m ≤ 3 + 3b.

La ligne 2 correspond à la composition $Mg_3V_2O_8$-$Mg_2B_2O_5$ des cendres (correspondant à $\alpha$=1 et β=0 dans la réaction (13)) :

$$(13A) \qquad V_2O_5 + (3 + 2b)\, MgO + b\, B_2O_3 \rightarrow Mg_3V_2O_8 + b\, Mg_2B_2O_5.$$

La quantité minimale de MgO à introduire pour parvenir à convertir $V_2O_5$ exclusivement en $Mg_3V_2O_8$ vaut donc : m = 3 + 2b. Par exemple pour b=1, on a m=5, qui est à comparer avec la valeur de 12,6 du rapport molaire ($MgO/V_2O_5$) nécessaire dans l'inhibition classique (équation (4)).

La ligne 3 correspond à la composition finale $Mg_3V_2O_8$-$Mg_3B_2O_6$ des cendres (correspondant à $\alpha$=1 et β=1 dans la réaction (13)) :

$$(13B) \qquad V_2O_5 + (3 + 3b)\, MgO + b\, B_2O_3 \rightarrow Mg_3\, V_2O_8 + b\, Mg_3B_2O_6$$

On peut aussi ajuster la valeur de m entre (3 + 2b) et (3 + 3b) et prendre, par exemple, m = 3 + 2,5 b (correspondant à $\alpha$=1 et β=0,5 dans la réaction (13)) :

$$(13C) \qquad V_2O_5 + (3 + 2,5\, b)\, MgO + b\, B_2O_3 \rightarrow Mg_3V_2O_8 + 0,5\, b\, Mg_2B_2O_5 + 0,5\, b\, Mg_3B_2O_6.$$

Le cas le plus général dans la zone 30 correspond au bilan:

$$(13D) \qquad V_2O_5 + [3 + (2+\beta)\, b]\, MgO + b\, B_2O_3 \rightarrow Mg_3V_2O_8 + b(1-\beta)\, Mg_2B_2O_5 + \beta b\, Mg_3B_2O_6$$

c'est-à-dire : m = 3 + (2 + β)b, où β est compris entre 0 et 1.

D'après (13D), le pourcentage molaire en borates de magnésium (OB+PB) dans les cendres s'écrit :

$$\% \text{ borates} = 100\, [b(1-\beta) + b\, \beta] / [1 + b(1-\beta) + b\, \beta] = 100\, b/(1 + b).$$

L'effet d'anti-déposition des cendres étant fonction de la teneur en borates de magnésium (phases OB et MB) dans les produits de réaction, il est donc possible d'ajuster cet effet en jouant sur la valeur du paramètre b.

Ainsi :

- la teneur minimale en borates de magnésium de 33% dans les cendres pour assurer l'effet d'anti-déposition, point déjà mentionné, correspond à b supérieur ou égal à 0,5.

- pour une valeur de b=1, les cendres se composent de 50% de borates de magnésium et 50% d'orthovanadate de magnésium
- pour b=3, on a 75% de borates de magnésium et 25% d'orthovanadate de magnésium.

Les conditions de dosage observées comme étant les plus performantes sont celles représentées par le point correspondant à : b=3 et m=9. Cela correspond précisément à la situation où l'inhibiteur est $Mg_3B_2O_6$ (réaction (10) ou réaction (13A) avec b=3). Dans ce cas, les cendres contiennent, en moles, 75% de borates de magnésium et 25% d'orthovanadate de magnésium. Leur point de fusion est de l'ordre de 1200°C et le taux de déposition est alors réduit d'environ 88% par rapport à l'utilisation de MgO seul.

Dans ce qui suit, le dosage avec des teneurs correspondant à : b=3 et m=9 (mettant en jeu l'inhibiteur $Mg_3B_2O_6$) sera pris comme cas de référence pour l'inhibition modifiée au bore.

Deux autres dosages intéressants sont ceux correspondants aux points :

b=1 avec m=6 et
b=2 avec m=8.

Les rapports molaires du magnésium m et du bore b sont ainsi choisis préférentiellement et respectivement égaux à 3 et 9, ou à 1 et 6, ou à 2 et 8.

En vue de contenir le coût de l'inhibition et l'émission de poussières, le paramètre b doit être limité, par exemple à la valeur 3,5. Ainsi, le rapport molaire du bore b est compris avantageusement entre 0,5 et 3,5, de préférence entre 1 et 3.

Enfin, en présence d'une quantité non négligeable de sodium définie par le rapport molaire s = $(Na_2SO_4/V_2O_5)$, il est possible de réduire le rapport m = $MgO/V_2O_5$. En effet, la capture de $Na_2SO_4$ sous forme de $Na_4B_2O_5$ consomme du bore (selon la réaction 10b) qui ne pourra donc pas former l'oxyde mixte au magnésium et au bore avec MgO. En particulier, dans le cas où β=0 qui correspond aux valeurs minimales du rapport m (points proches de la ligne 2 d'équation m = 3 + 2b), on a:

$$(13E) \quad V_2O_5 + (3 + 2b - s)\, MgO + b\, B_2O_3 + s\, Na_2SO_4 \rightarrow Mg_3V_2O_8 + (b - s/2)\, Mg_2B_2O_5 + s/2\, Na_4B_2O_5 + s\, SO_3$$

soit: m = 3+2b-s (au lieu de m =3+2b).

Pour atténuer le durcissement des cendres causé par la présence de sodium, on pourra augmenter la valeur de b, ce qui permet d'augmenter le pourcentage de borates de magnésium dans celles-ci.

Ainsi, il est proposé selon un premier aspect, un procédé de fonctionnement d'un équipement thermique comprenant une chambre de combustion alimentée avec un combustible contaminé au vanadium, au soufre et éventuellement au sodium. En particulier, on alimente également la chambre de combustion avec du bore et du magnésium, en quantités telles que les rapports molaires du sodium $s = \dfrac{Na_2SO_4}{V_2O_5}$, du magnésium $m = \dfrac{MgO}{V_2O_5}$ et du bore

$b = \dfrac{B_2O_3}{V_2O_5}$ vérifient la relation $m \geq 3+2b-s$, de manière à ce que les produits de combustion comprennent de l'orthovanadate de magnésium, de l'oxyde mixte au magnésium et au bore et éventuellement du borate de sodium.

De préférence, les rapports molaires du magnésium m, du bore b et du sodium s vérifient la relation : $3 + 2b - s \leq m \leq 3 + 3b - s$.

De préférence, les rapports molaires du magnésium m, du bore b et du sodium s vérifient la relation : m = 3 + 2,5 b - s.

En particulier, au moins une partie du bore et du magnésium alimentant la chambre de combustion peut être sous forme d'oxyde mixte au magnésium et au bore.

Selon un mode de mise en oeuvre, on forme également, en amont ou dans la chambre de combustion, un oxyde mixte au magnésium et à l'aluminium. La réaction d'inhibition (14) par l'aluminate de magnésium $MgAl_2O_4$ s'écrit :

$$(14) \quad V_2O_5 + n\, MgAl_2O_4 \rightarrow Mg_3V_2O_8 + 3\, Al_2O_3 + (n-3)\, MgAl_2O_4$$

et dans les conditions stoechiométriques :

$$(14b) \quad 3\, MgAl_2O_4 + V_2O_5 \rightarrow Mg_3V_2O_8 + 3\, Al_2O_3.$$

L'alumine $Al_2O_3$ et le spinelle $MgAl_2O_4$ ont des points de fusion de 2045˚C et 2020˚C respectivement. Un autre avantage de l'utilisation, comme inhibiteur, de $MgAl_2O_4$ formé *in situ* ou en amont de flammes, réside dans la réduction du taux de déposition grâce au léger effet d'érosion induit par les particules d'$Al_2O_3$ naissantes et à la propriété qu'a l'alumine de décomposer à haute température un certain nombre de sulfates métalliques qui participent à l'encrassement, voire la corrosion, des pièces chaudes.

Selon un mode de mise en oeuvre, on forme également, en amont ou dans la chambre de combustion, un oxyde mixte au magnésium et au fer. La réaction d'inhibition (15) par l'oxyde mixte $MgFe_2O_4$ s'écrit :

$$(15) \qquad V_2O_5 + n\ MgFe_2O_4 \rightarrow Mg_3V_2O_8 + 3\ Fe_2O_3 + (n\text{-}3)\ MgFe_2O_4$$

et dans les conditions stoechiométriques :

$$(15b) \qquad V_2O_5 + 3\ MgFe_2O_4 \rightarrow Mg_3V_2O_8 + 3\ Fe_2O_3.$$

L'hématite ($Fe_2O_3$) et le spinelle $MgFe_2O_4$ ont des points de fusion de 1596˚C et 1722˚C respectivement. Un autre avantage de l'utilisation du spinelle $MgFe_2O_4$ comme inhibiteur réside dans la réduction des émissions de fumées; en effet, le fer (III) joue au sein des flammes le rôle de catalyseur d'oxydation des agrégats carbonés c'est-à-dire des suies, la quantité de fer minimale nécessaire pour obtenir un tel effet étant de quelques dizaines de ppm.

Selon un mode de mise en oeuvre, on forme également, en amont ou dans la chambre de combustion, un oxyde mixte au magnésium et au silicium. La réaction d'inhibition (16a) par l'oxyde mixte $Mg_2SiO_4$ s'écrit :

$$(16) \qquad V_2O_5 + n\ Mg_2SiO_4 \rightarrow Mg_3V_2O_8 + 3\ MgSiO_3 + (n\text{-}3)\ Mg_2SiO_4$$

et dans les conditions stoechiométriques :

$$(16b) \qquad V_2O_5 + 3\ Mg_2SiO_4 \rightarrow Mg_3\ V_2O_8 + 3\ MgSiO_3.$$

Le métasilicate ($MgSiO_3$) et l'orthosilicate ($Mg_2SiO_4$) ont des points de fusion de 1557˚C et 1888˚C respectivement. L'utilisation d'ortho-silicate de magnésium $Mg_2SiO_4$ comme inhibiteur, permet outre l'élévation du point de fusion des cendres réfractaires, de retarder fortement leur frittage, ceci du fait de la vitesse de cristallisation extrêmement lente de $MgSiO_3$. Ainsi, l'incorporation d'ortho-silicate de magnésium dans l'inhibiteur permet une élimination plus facile des dépôts et confère la possibilité de prolonger la durée de fonctionnement de la machine avant d'opérer un nettoyage.

Les réactions d'inhibition des différents oxydes mixtes exposés précédemment sont donc les réactions (10), (14), (15) et (16).

Ces réactions sont à comparer avec la réaction (4) de MgO avec $V_2O_5$ au cours de laquelle $MgSO_4$ (qui se décompose à partir de 900˚C) est formé.

Il peut être avantageux d'associer différents « oxydes mixtes au magnésium » à l'orthoborate de magnésium pris comme inhibiteur majoritaire, pour créer des formulation du type « $3MgO\text{-}B_2O_3$ / $xMgO\text{-}E_yO_z$ / $x'MgO\text{-}E'_y\cdot O_z\cdot$ /... » en vue de cumuler l'ensemble des avantages cités précédemment. On ajoute ainsi, à l'effet anti-déposition de $B_2O_3$, plusieurs autres fonctions opérationnelles liées aux propriétés physico-chimiques respectives des seconds oxydes. Pour cette raison, ces mélanges d'oxydes mixtes au magnésium peuvent être qualifiés d'inhibiteurs multifonctionnels.

S'agissant de la préparation des "oxydes mixtes au magnésium" et de leurs mélanges, et indépendamment du lieu où ils sont synthétisés (dans les flammes ou en amont de celles-ci), on partira de réactifs chimiques définis, à base de magnésium et du second élément. Ainsi, l'oxyde mixte au magnésium peut être formé dans la chambre de combustion, par réaction entre deux réactifs introduits en amont de la chambre de combustion, ou à partir d'au moins un précurseur introduit en amont de la chambre de combustion. Ces réactifs peuvent être choisis parmi ceux qui, par décomposition, forment respectivement les oxydes MgO et $E_yO_z$ à l'exclusion d'autres produits corrosifs. Il peut donc s'agir des composés suivants :

- pour le magnésium: l'oxyde, l'hydroxyde, le nitrate, le carbonate, un alcoxyde, un sulofonate, un carboxylate, etc.
- pour l'élément E : l'oxyde, l'hydroxyde ou l'acide (selon la nature chimique de E), le nitrate, le carbonate, un alcoxyde, un sulfonate, un carboxylate, etc.

Dans le cas où le second oxyde est $SiO_2$, il est possible par ailleurs de partir soit d'un ortho-silicate de tétra-alkyle de formule $Si(OR)_4$ et en particulier le TEOS (tetra-ethyl-orthosilicate) dans lequel R est le groupement éthyle, soit d'une huile silicone ou poly(dialkyl)siloxane qui est caractérisée par un enchaînement de groupes siloxanes (-Si-O-Si-) dans lequel chaque atome de silicium (tétravalent) est également lié à des groupes alkyles.

Selon leurs propriétés (état physique et solubilité), ces réactifs chimiques de base peuvent être stockés sous forme dissoute dans un solvant aqueux ou organique ou sous forme émulsionnée ou en suspension stabilisée (comme indiqué plus loin) dans un tel solvant et peuvent être introduits dans l'équipement soit au niveau des chambres de combustion, soit au niveau du "circuit-fuel" qui est le circuit à travers lequel le combustible est injecté dans les foyers.

S'agissant des inhibiteurs à base de MgO et $B_2O_3$, on peut partir d'un dérivé du magnésium du type « overbased sulfonate » ou « overbased carboxylate ». Dans ce qui suit, on considère pour fixer les idées, le cas d'un « overbased carboxylate ». L'expression « overbased carboxylate » (c'est-à-dire « carboxylate sur-enrichi en métal ») est utilisée dans la chimie des huiles de lubrification et désigne une formulation dans laquelle un acide carboxylique est combiné à une quantité sur-stoechiométrique de métal (le magnésium dans le cas présent). Une méthode classique de préparation d'un tel carboxylate sur-enrichi en métal est par exemple la série d'étapes suivantes : (i) dissoudre dans un solvant pétrolier faiblement volatil un acide carboxylique, (ii) mettre en suspension, sous agitation, dans ce même milieu un fort excès d'un composé du métal qui est en général l'oxyde, l'hydroxyde, le carbonate ou le bicarbonate, (iii) ajouter un catalyseur qui est par exemple un alcool (qui favorise le transport des espèces métallique non oléophiles), (iv) chauffer l'ensemble agité, à une température supérieure à 50˚C et inférieure à 200˚C et (v) compléter, à cette température, la neutralisation du métal en excès par barbotage de gaz carbonique. Le carboxylate (ou sulfonate) sur-enrichi en magnésium ainsi obtenu sera ensuite boraté par introduction d'acide borique en proportions adéquates et agitation pendant plusieurs heures entre 50 et 200˚C. Alternativement, on peut adjoindre au carboxylate (ou au sulfonate) sur-enrichi en magnésium ainsi obtenu, un composé du bore liposoluble tel qu'un borate d'alkyle de formule générique $(Alk)_3B$, par exemple le borate d'éthyle $(C_2H_5)_3B$.

S'agissant de $Al_2O_3$, on peut utiliser par exemple un carboxylate d'aluminium ou bien une dispersion dans une fraction organique, de micro ou nanoparticules d'alumine anhydre ou hydratée AlO(OH).

Enfin, s'agissant de $Fe_2O_3$, il est possible d'obtenir des carboxylates notamment des tallates (sels d'acide gras du fer) ou de réaliser des suspensions stables de micro ou nanoparticules de $Fe_2O_3$ dans des solvants contenant une fraction hydrocarbonée.

A partir de ces réactifs chimiques de base, deux méthodes de préparation sont possibles :

- synthèse de l'oxyde mixte réalisée *in situ*, c'est-à-dire directement dans la chambre de combustion de l'équipement de combustion, par réaction d'au moins deux réactifs introduits en amont de ladite chambre de combustion. Dans ce cas les réactifs chimiques qui viennent d'être mentionnés sont stockés en amont du foyer de l'équipement de combustion et injectés, en proportions et quantités convenables, soit en un point du circuit fuel où ils seront intimement mélangés au combustible à l'aide d'un mélangeur statique ou dynamique, soit directement dans le foyer. La notion de "proportions convenables" se réfère aux rapports entre le magnésium et les seconds oxydes (paramètre « x ») tandis que celle de "quantités convenables" se réfère au rapport de dosage Mg/V (paramètre « m »).
- synthèse d'oxyde mixte ou de précurseurs en amont du foyer de l'équipement. A partir des réactifs chimiques mentionnées précédemment, on synthétise et on stocke en amont de l'équipement de combustion soit l'oxyde mixte ou le mélange d'oxydes mixtes, soit un précurseur de cet oxyde mixte ou des précurseurs de ce mélange d'oxydes mixtes. Le terme de "précurseurs" fait référence à une combinaison (ou à un ensemble de combinaisons) qui contient du magnésium et du "second élément" sans être nécessairement un composé chimique défini du magnésium et du second élément et qui produit dans les flammes l'oxyde mixte au magnésium désiré. De tels précurseurs sont par exemple des sol-gels, ou d'autres structures nanométriques. L'oxyde mixte ou son précurseur, ainsi préparé et stocké, est injecté, en quantité convenable soit directement dans le foyer, soit en un point du circuit-fuel où ils est intimement mélangé au combustible à l'aide d'un mélangeur statique ou dynamique.

Pour obtenir une efficacité optimale de l'inhibition, l'oxyde mixte, et en particulier l'oxyde mixte au magnésium, peut être sous forme nanométrique. Il peut être notamment avantageux de synthétiser des oxydes mixtes ou des précurseurs sous forme de particules très divisées ou, de préférence, sous forme de substances nano-structurées, selon une des méthodes suivantes:

- la mécano-synthèse ou la mécano-activation réalisée soit (i) directement au sein du solvant aqueux ou hydrocarboné dans lequel les nano-produits formés seront véhiculés vers l'équipement de combustion, soit (ii) sous air ou sous atmosphère contrôlée avec mise en suspension ultérieure des nano-produits formés dans ledit solvant aqueux ou hydrocarboné ;
- les méthodes de "chimie douce", telle que: méthode sol-gel, incluant la variante de Pecchini (décrite dans le brevet US 3 330 679) ou de Cipollini (décrite dans le brevet US 4 654 075), méthodes à base des nitrates fondus, la méthode des "émulsions sèches" (décrite dans le brevet US 4 908 338) qui sera interrompue avant la phase de distillation de la coupe hydrocarbonée etc.

En effet, de tels composés nano-structurés sont particulièrement réactifs vis-à-vis du vanadium dans les flammes et se prêtent à des dispersions aqueuses ou hydrocarbonées extrêmement fines et très stables. Pour assurer les fonctions de mise en suspension et de stabilisation, on peut utiliser des additifs dispersants tels que des polymères à "structure de peigne" ("comb polymers"), c'est-à-dire dont la structure comporte une "charpente" hydrophile et des "dents" lipophiles ou vice versa, par exemple le poly(hydroxyéthyl)-méthacrylate (PHEMA).

Selon un aspect, on utilise le procédé décrit précédemment pour inhiber la corrosion par l'oxyde de vanadium de l'équipement thermique, en présence éventuellement de sodium.

Selon un aspect, on protège contre la corrosion vanadique les matériaux métalliques, céramiques ou composites d'un équipement de combustion qui est par exemple une turbine à gaz et qui brûle des combustibles contaminés au vanadium associé ou non au sodium dans un rapport molaire $s=(Na_2SO_4/V_2O_5)$, en apportant ou en formant dans le foyer dudit équipement un inhibiteur constitué par un mélange de borates de magnésium et éventuellement d'oxyde de magnésium, tel que :

（i) le rapport molaire $(B_2O_3/V_2O_5)$ est égal à b;
(ii) le rapport molaire $m=(MgO/V_2O_5)$ est compris entre (3+2b-s) et (3+3b) et
(ii) b est compris entre 0,5 et 3,5.

Préférentiellement, le couple (b, m) vaut (3,9), (1,6) ou vérifie la relation m = 3 + 2,5 b. Plus préférentiellement, le couple (b, m) vaut (3,9).

Ces inhibiteurs sont qualifiés d'inhibiteurs bifonctionnels car, outre leur fonction d'anticorrosion, ils améliorent les conditions de fonctionnement de la machine et en particulier son rendement, sa puissance et sa maintenance grâce à une modification favorable des cendres.

Selon un autre mode de l'invention, on apporte ou on forme dans le foyer dudit équipement un inhibiteur constitué par un ou plusieurs oxydes mixtes au magnésium dont les seconds oxydes $E_yO_z$ sont d'une part et principalement $B_2O_3$, et d'autre part un ou plusieurs autres oxydes choisis préférentiellement dans la liste : $Al_2O_3$, $Fe_2O$-, et $SiO_2$, avec des rapports molaires "$x=MgO/E_yO_z$" égaux à: 3, 1, 1 et 2 respectivement.

Ces formulations multifonctionnelles sont caractérisées par l'association d'ortho-borate de magnésium à un ou plusieurs des trois oxydes mixtes suivants: (i) le spinelle $MgAl_2O_4$ en vue de minimiser le taux de déposition des cendres grâce à l'effet d'érosion induit par les particules d'$Al_2O_3$ naissantes et de réduire l'encrassement par certains sulfates métalliques (tels que $CuSO_4$, $ZnSO_4$) présents à l'état d'impuretés dans les gaz de combustion; (ii) le spinelle $MgFe_2O_4$ en vue de réduire l'émission de fumées grâce à l'effet catalytique du fer (III) sur la combustion des suies et; (iii) l'ortho-silicate de magnésium en vue de retarder leur frittage et donc de prolonger éventuellement la marche de la machine avant d'opérer une remise en propreté de celle-ci.

La méthode primaire de remise en propreté de l'équipement est le nettoyage à sec par injection d'abrasif doux et tel que décrit précédemment, le lavage à l'eau étant un mode de remise en propreté secondaire.

Pour mieux illustrer l'invention, plusieurs modes de réalisation sont décrits ci après. Les concentrations en ppm (parties par million) des métaux sont à prendre sous forme massique.

1er exemple de réalisation de l'invention :

Une turbine de classe E destinée à la production d'électricité a une puissance thermique de 360 MW (soit une puissance électrique de l'ordre de 120 MW) et une température de flamme réglée à 1090˚C. Elle brûle, en continu, à plein régime, un fuel pétrolier lourd dont la teneur en vanadium est de l'ordre de 40 à 50ppm. La corrosion vanadique est inhibée au départ par l'injection de 120 à 150ppm de magnésium (Mg/V = 3 en masse) qui sont ajoutés au fuel sous forme de carboxylate de magnésium. Le fuel brut contient au départ 50ppm de métaux alcalins et est dessalé par lavage à l'eau de façon à atteindre un niveau de (sodium + potassium) de 0,7ppm à l'entrée de la TAG. La TAG est équipée d'un dispositif de nettoyage à sec (projectiles utilisés : fragments de coquilles de noix) et d'un dispositif de lavage de la turbine (eau déminéralisée à 80-90˚C). L'opérateur réalise des opérations de nettoyage à sec deux fois par jour. Toutefois, ces nettoyages à sec ne lui permettent de récupérer qu'une faible fraction de la puissance perdue, fraction qui passe en outre de 30% environ en début de cycle à 10% environ en fin de cycle, du fait du phénomène de compaction et de frittage des dépôts de $MgO/MgSO_4$. Le rythme « net » de perte de puissance de la TAG par effet d'encrassement de la turbine se situe en moyenne autour de 10% pour 7 jours (168 heures) de marche, soit de 0,06% par heure. L'adjectif « net » signifie que ce rythme de perte de puissance tient compte des restaurations partielles de puissance apportées par les nettoyages à sec. Ceci détermine l'opérateur à opérer un lavage turbine précisément tous les 7 jours qui est donc la durée d'un « cycle de production » (période entre deux lavages). L'opération de lavage à l'eau dure environ 20 heures entre l'arrêt de la TAG et son redémarrage. La perte associée de disponibilité de la TAG est donc de l'ordre de :

$$20/(168+20) = 11\ \%.$$

Ces conditions d'opération et maintenance peu favorables conduisent l'opérateur à remplacer l'inhibiteur à base de carboxylate de magnésium par un inhibiteur $MgO-B_2O_3$ qui est produit *in situ* dans les flammes par injection dans le combustible d'une solution hydrocarbonée d'un « carboxylate sur-enrichi en magnésium » et boraté (en anglais : « borated overbased magnesium carboxylate ») dans laquelle les rapports molaires $b=B_2O_3/V_2O_5$ et $m=MgO/V_2O_5$ valent respectivement 1 et 6. La réaction steechiométrique d'inhibition est la réaction (13B) dans laquelle b=1 et m=6:

$$(17) \qquad V_2O_5 + 6\ MgO + B_2O_3 \rightarrow Mg_3\ V_2O_8 + Mg_3B_2O_6$$

Le rapport d'inhibition pratique ($MgO/V_2O_5$) est choisi égal à 6 en moles (c'est-à-dire sans marge par rapport au rapport d'inhibition théorique de la réaction (17)).

L'opérateur conserve la fréquence bi-quotidienne des nettoyages à sec qui permettent, cette fois, de récupérer à chaque fois 80% en moyenne de la puissance perdue entre deux nettoyages consécutifs. Le rythme moyen de perte de puissance de la TAG est diminué d'un facteur 5. L'opérateur réalise désormais un lavage toutes les 500 heures et obtient par conséquent un gain de disponibilité de sa machine de : (20/188 - 20/520) ~ 7% par rapport à la situation antérieure, tout en augmentant considérablement son rendement et sa production électrique du fait que la perte de puissance est 5 fois moins rapide le long d'un cycle de production.

2ème exemple de réalisation de l'invention :

La TAG est du même modèle que celle du premier exemple et l'inhibiteur de départ est aussi un carboxylate de magnésium. La TAG a une température de flamme réglée également à 1090°C. Elle est équipée de dispositifs de nettoyage à sec et de lavage de la turbine identiques à ceux de l'exemple 1 et l'opérateur réalise aussi des opérations bi-quotidiennes de nettoyage à sec. Toutefois le fuel lourd ne contient que 10ppm de vanadium. Le rythme « net » de perte de puissance de la TAG se situe en moyenne autour de 10% pour 20 jours (480 heures) de marche soit 0,02%/ heure. L'opérateur opère un lavage de la turbine tous les 20 jours qui est donc la durée d'un « cycle de production ». L'opérateur souhaite augmenter de 30°C la température de flamme de sa TAG en vue de gagner en puissance et en rendement. Il remplace à cette fin l'inhibiteur à base de carboxylate de magnésium par un inhibiteur à base d'ortho-borate de magnésium. Celui-ci est préparé également par introduction dans le fuel d'une solution hydrocarbonée d'un « carboxylate sur-enrichi en magnésium » et boraté (borated « overbased carboxylate ») dans laquelle les rapports molaires $b=B_2O_3/V_2O_5$ et $m=MgO/V_2O_5$ sont choisis cette fois plus élevés et valent 3 et 9, ceci en vue d'augmenter la teneur en borates de magnésium dans les cendres et de réduire par là l'accumulation de cendres. La réaction stoechiométrique d'inhibition est la réaction 10. Le rapport d'inhibition molaire « m » est choisi égal à 9 (c'est-à-dire sans marge par rapport au rapport d'inhibition théorique de la réaction (10)). L'opérateur conserve la fréquence bi-quotidienne des nettoyages à sec. Il constate qu'avec la nouvelle valeur de 1120°C de $T_{f1}$ et l'inhibition à l'ortho-borate de magnésium, le rythme « net » de perte de puissance est sensiblement inchangé (0,02%/heure). L'opérateur réalise ici aussi un lavage toutes les 500 heures. Il augmente considérablement le rendement et la production électrique de sa machine tout en protégeant son intégrité et sans en dégrader la disponibilité.

3ème exemple de réalisation de l'invention :

Une TAG de 120 MW de puissance thermique (40 MW électriques) brûle un fuel lourd qui est contaminé par 50ppm de vanadium. Toutefois, le fuel lourd livré est très visqueux et contaminé en outre par 75 ppm de sodium qui n'est pas totalement enlevé par l'unité de traitement du fuel en amont de la TAG, la teneur en sodium à la sortie de cette dernière et à l'entrée de la TAG étant de 9,1 ppm, soit un rapport molaire s = ($Na_2SO_4/V_2O_5$) égal à 0,40. En vue de combattre l'effet corrosif additionnel des métaux alcalins, l'opérateur décide d'utiliser un inhibiteur magnésio-boré en ajustant le rapport $MgO/B_2O_3$ en conformité avec la réaction (13E) dans laquelle le rapport $b=(B_2O/V_2O_5)$ est pris égal à 3. La réaction (13E) s'écrit dans ce cas :

$$(13E) \qquad V_2O_5 + 8,6\ MgO + 3\ B_2O_3 + 0,40\ Na_2SO_4 \rightarrow Mg_3V_2O_8 + 2,8\ Mg_2B_2O5 + 0,2\ Na_4B_2O_5 + 0,4\ SO_3$$

Pour assurer une inhibition correcte avec cette formulation, on doit donc pratiquer une injection suffisante pour assurer un rapport d'inhibition molaire $MgO/V_2O_5$ supérieur ou égal à 8,6 et on doit avoir dans le combustible inhibé: un rapport molaire $MgO/B_2O_3$ de 8,6/3=2,87. Le pourcentage de cendres magnésio-borées dans les cendres est égal à : 2,8/(1+2,8+0,2) = 70%.

L'inhibiteur peut être préparé à partir de nano-particules de $Mg_3B_2O_8$ formées par la méthode de Cippolini (brevet US No 4 654 075) en suspension dans un hydrocarbure du type kerdane. L'opérateur parvient ainsi à protéger sa machine de l'effet corrosif de $Na_2SO_4$ et $V_2O_5$, tout en augmentant considérablement son rendement et sa production

électrique.

<u>4ème exemple de réalisation de l'invention</u> :

Une TAG de 120 MW de puissance thermique (40 MW électriques) brûle un fuel lourd qui est contaminé par 51 ppm de vanadium mais est par ailleurs très aromatique car contenant une assez forte teneur en « High Cycle Oil » (HCO) utilisé comme stabilisant des asphaltènes contenus dans ce fuel.
Par suite d'une émission importante de fumées noires, l'opérateur décide de remplacer son inhibiteur à base de magnésium par un inhibiteur mixte 75% $Mg_3B_2O_6$ - 25% $MgFe_2O_4$.
La réaction stoechiométrique d'inhibition s'écrit :

$$(18) \qquad 2{,}25\ Mg_3B_2O_6 + 0{,}75\ MgFe_2O_4 + V_2O_5 \rightarrow Mg_3V_2O_8 + 2{,}25\ Mg_2B_2O_5 + 0{,}75\ Fe_2O_3$$

Le rapport d'inhibition théorique est $(MgO/V_2O_5)$ = 7,5.
La teneur en fer dans le combustible inhibé peut se calculer de la façon suivante.
Par kilogramme de fuel, on a 51mg de vanadium qui représentent 0,001 atome de ce métal qui se transforme dans la combustion en 0,0005 mole de $V_2O_5$. La réaction d'inhibition (18) forme : 0,0005·0,75·2 = 0,00075 atome de fer sous forme de $Fe_2O_3$. On a donc dans le fuel : 0,00075·58 = 0,035g, soit 35mg d'élément fer par kilogramme de fuel, quantité suffisante pour réduire l'opacité des fumées à un niveau acceptable.
Cet inhibiteur multifonctionnel est produit par le procédé des "émulsions sèches" (brevet US No 4 908 338) dans lequel des particules contenant par exemple, en proportions molaires: 55,6% de $Mg(NO_3)_2$, 33,3 % de $H_3BO_3$ et 11,1 % de $Fe(NO_3)_3$ sont mises en suspension stabilisée dans une phase hydrocarbonée pour former des précurseurs des deux oxydes mixtes et sont introduites dans les flammes par injection dans le circuit fuel.

**Revendications**

1. Procédé de fonctionnement d'un équipement thermique comprenant une chambre de combustion alimentée avec un combustible contaminé au vanadium, au soufre et éventuellement au sodium, dans lequel on alimente également la chambre de combustion avec du bore et du magnésium, en quantités telles que les rapports molaires du sodium $s = \dfrac{Na_2SO_4}{V_2O_5}$, du magnésium $m = \dfrac{MgO}{V_2O_5}$ et du bore $b = \dfrac{B_2O_3}{V_2O_5}$ vérifient la relation m ≥ 3 + 2b-s, de manière à ce que les produits de combustion comprennent de l'orthovanadate de magnésium, de l'oxyde mixte au magnésium et au bore et éventuellement du borate de sodium.

2. Procédé de fonctionnement selon la revendication 1 dans lequel les rapports molaires du sodium, du magnésium et du bore vérifient également la relation : m ≤ 3+3b-s.

3. Procédé de fonctionnement selon la revendication 2 dans lequel le rapport molaire du bore b est compris entre 0,5 et 3,5, de préférence entre 1 et 3.

4. Procédé de fonctionnement selon l'une des revendications précédentes dans lequel les rapports molaires du bore b et du magnésium m sont choisis respectivement égaux à 3 et 9, ou à 1 et 6, ou à 2 et 8.

5. Procédé de fonctionnement selon l'une des revendications 1 à 3 dans lequel les rapports molaires du bore b et du magnésium m vérifient la relation :

$$m = 3 + 2{,}5 \cdot b - s \,.$$

6. Procédé de fonctionnement selon l'une des revendications précédentes dans lequel au moins une partie du bore et du magnésium alimentant la chambre de combustion est sous forme d'oxyde mixte au magnésium et au bore.

7. Procédé de fonctionnement selon la revendication 6 dans lequel l'oxyde mixte au magnésium et au bore est sous forme nanométrique.

**8.** Procédé de fonctionnement selon l'une des revendications précédentes dans lequel on forme également, en amont ou dans la chambre de combustion, un oxyde mixte au magnésium et au fer et/ou un oxyde mixte au magnésium et au silicium et/ou un oxyde mixte au magnésium et à l'aluminium.

**9.** Procédé de fonctionnement selon la revendication 8 dans lequel l'oxyde mixte au magnésium est formé dans la chambre de combustion, par réaction entre deux réactifs introduits en amont de la chambre de combustion.

**10.** Procédé de fonctionnement selon la revendication 8 dans lequel l'oxyde mixte au magnésium est formé dans la chambre de combustion, à partir d'au moins un précurseur introduit en amont de la chambre de combustion.

**11.** Procédé de fonctionnement selon l'une des revendications 8 à 10 dans lequel l'oxyde mixte est sous forme nanométrique.

**12.** Utilisation du procédé selon l'une des revendications 1 à 11 pour inhiber la corrosion par l'oxyde de vanadium de l'équipement thermique, en présence éventuellement de sodium.

**Claims**

**1.** Method of operating a thermal installation comprising a combustion chamber fed with a fuel contaminated with vanadium, with sulphur and possibly with sodium, in which method the combustion chamber is also fed with boron and with magnesium, in quantities such *that the* sodium molar ratio s = $Na_2SO_4/V_2O_5$, the magnesium molar ratio m = $MgO/V_2O_5$ and the boron molar ratio b = $B_2O_3/V_2O_5$ satisfy the equation m≥3+2b-s, so that the combustion products comprise magnesium orthovanadate, mixed magnesium boron oxide and possibly sodium borate.

**2.** Operating method according to Claim 1, in which the sodium, magnesium and boron molar ratios also satisfy the equation: m ≤ 3+3b-s.

**3.** Operating method according to Claim 2, in which the boron molar ratio b is between 0.5 and 3.5, preferably between 1 and 3.

**4.** Operating method according to one of the preceding claims, in which the boron and magnesium molar ratios b and m are chosen to be equal to 3 and 9, or to 1 and 6, or to 2 and 8, respectively.

**5.** Operating method according to one of Claims 1 to 3, in which the boron and magnesium molar ratios b and m satisfy the equation: m 3+2.5b-s.

**6.** Operating method according to one of the preceding claims, in which at least some of the boron and magnesium feeding the combustion chamber is in the form of mixed magnesium boron oxide.

**7.** Operating method according to Claim 6, in which the mixed magnesium boron oxide is in nanoscale form.

**8.** Operating method according to one of the preceding claims, in which a mixed magnesium iron oxide and/or a mixed magnesium silicon oxide and/or a mixed magnesium aluminium oxide are/is also formed upstream of or in the combustion chamber.

**9.** Operating method according to Claim 8, in which the mixed magnesium oxide is formed in the combustion chamber by reaction between two reactants introduced upstream of the combustion chamber.

**10.** Operating method according to Claim 8, in which the mixed magnesium oxide is formed in the combustion chamber from at least one precursor introduced upstream of the combustion chamber.

**11.** Operating method according to one of Claims 8 to 10, in which the mixed oxide is in nanoscale form.

**12.** Use of the method according to one of Claims 1 to 11 to inhibit corrosion of the thermal installation by vanadium oxide, possibly in the presence of sodium.

**Patentansprüche**

1. Verfahren zum Betrieb einer thermischen Einrichtung mit einer mit einem mit Vanadium, Schwefel und gegebenenfalls Natrium verunreinigten Brennstoff gespeisten Brennkammer, bei dem man die Brennkammer auch mit Bor und Magnesium in solchen Mengen speist, dass die Molverhältnisse von Natrium s = $Na_2SO_4/V_2O_5$, von Magnesium m = $MgO/V_2O_5$ und von Bor b = $B_2O_3/V_2O_5$ die Beziehung m $\geq$ 3 + 2b - s erfüllen, so dass die Verbrennungsprodukte Magnesiumorthovanadat, Mischoxid von Magnesium und Bor und gegebenenfalls Natriumborat umfassen.

2. Betriebsverfahren nach Anspruch 1, bei dem die Molverhältnisse von Natrium, Magnesium und Bor auch die Beziehung $m \leq 3 + 3b$ - s erfüllen.

3. Betriebsverfahren nach Anspruch 2, bei dem das Molverhältnis von Bor b zwischen 0,5 und 3,5 und vorzugsweise zwischen 1 und 3 liegt.

4. Betriebsverfahren nach einem der vorhergehenden Ansprüche, bei dem die Molverhältnisse von Bor b und Magnesium m gleich 3 und 9 bzw. 1 und 6 bzw. 2 und 8 gewählt werden.

5. Betriebsverfahren nach einem der Ansprüche 1 bis 3, bei dem die Molverhältnisse von Bor b und Magnesium m die Beziehung:

$$m = 3 + 2,5 \cdot b - s$$

erfüllen.

6. Betriebsverfahren nach einem der vorhergehenden Ansprüche, bei dem mindestens ein Teil des die Brennkammer speisenden Bors und Magnesiums in Form von Mischoxid von Magnesium und Bor vorliegt.

7. Betriebsverfahren nach Anspruch 6, bei dem das Mischoxid von Magnesium und Bor in nanoskaliger Form vorliegt.

8. Betriebsverfahren nach einem der vorhergehenden Ansprüche, bei dem man auch vor oder in der Brennkammer ein Mischoxid von Magnesium und Eisen und/oder ein Mischoxid von Magnesium und Silicium und/oder ein Mischoxid von Magnesium und Aluminium bildet.

9. Betriebsverfahren nach Anspruch 8, bei dem man das Mischoxid von Magnesium in der Brennkammer durch Reaktion zwischen zwei vor der Brennkammer eingetragenen Reaktanten bildet.

10. Betriebsverfahren nach Anspruch 8, bei dem man das Mischoxid von Magnesium in der Brennkammer aus mindestens einer vor der Brennkammer eingetragenen Vorstufe bildet.

11. Betriebsverfahren nach einem der Ansprüche 8 bis 10, bei dem das Mischoxid in nanoskaliger Form vorliegt.

12. Verwendung des Verfahrens gemäß einem der Ansprüche 1 bis 11 zur Inhibierung der Vanadiumoxidkorrosion der thermischen Einrichtung, gegebenenfalls in Gegenwart von Natrium.

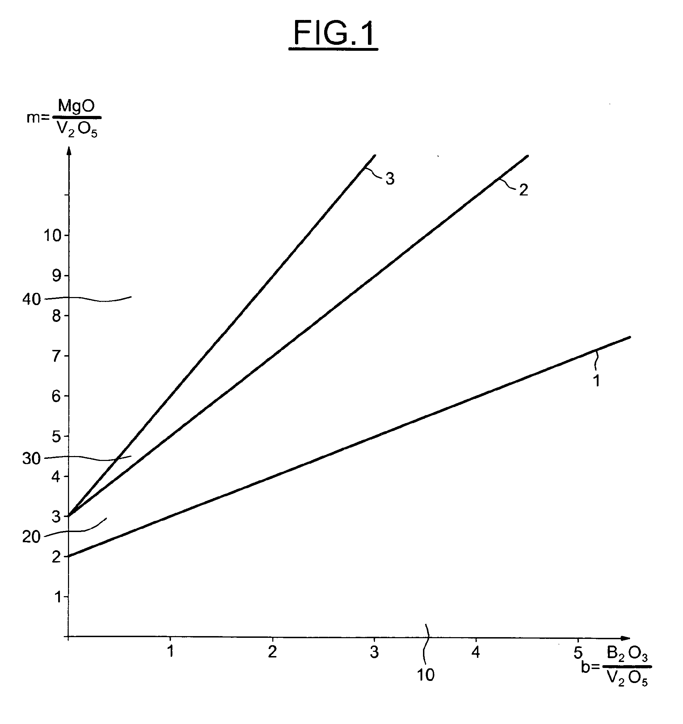

# FIG.1

**EP 2 236 585 B1**

**RÉFÉRENCES CITÉES DANS LA DESCRIPTION**

**Documents brevets cités dans la description**

- US 3330679 A
- US 4654075 A
- US 4908338 A